# EUROPEAN PATENT SPECIFICATION

(11) **EP 3 368 494 B1**
(45) Date of publication and mention of the grant of the patent: **13.05.2020**
(21) Application number: 15797013.8
(22) Date of filing: 29.10.2015
(51) Int. Cl.: C04B 28/02, C04B 28/04, C04B 28/12, C04B 28/18, C04B 28/20, C04B 40/06, C04B 111/00

(54) **MINERAL SEALING MORTAR**
MINERALISCHER ABDICHTUNGSMÖRTEL
MORTIER DE SCELLEMENT MINÉRAL

(43) Date of publication of application: 05.09.2018
(73) Proprietor: Knauf Gips KG, 97346 Iphofen (DE)
(72) Inventor: OBERT, Clemens, 77960 Seelbach-Wittelbach (DE)
(74) Representative: Gleim, Christian Ragnar
(86) International application number: PCT/EP2015/002144
(87) International publication number: WO 2017/071722

(56) References cited:
- EP-A1- 1 069 092
- WO-A1-2013/063743
- WO-A1-2014/162097
- AT-B- 380 228
- DE-A1- 10 150 601
- DE-A1-102010 001 617
- DE-A1-102014 101 519
- US-B1- 6 547 873
- DATABASE WPI Week 200937 8 April 2009 (2009-04-08) Thomson Scientific, London, GB; AN 2009-H74718 XP002759472, & CN 101 402 517 A (ANHUI TIANJINYUN PAINT IND CO LTD) 8 April 2009 (2009-04-08)
- DATABASE WPI Week 201179 7 September 2011 (2011-09-07) Thomson Scientific, London, GB; AN 2011-M51637 XP002759473, & CN 102 173 673 A (CHONGQING BANGRUI CONSTR HEAT RESERVING ENG CO LTD) 7 September 2011 (2011-09-07)
- DATABASE WPI Week 201114 27 October 2010 (2010-10-27) Thomson Scientific, London, GB; AN 2010-P71111 XP002759474, & CN 101 870 573 A (SHANGHAI INSURING POLYMER MATERIAL CO) 27 October 2010 (2010-10-27)

## Description

The invention relates to a mineral sealing mortar to be applied at the plinth of a building for moisture protection and a building having a plinth to which the sealing mortar is applied according to the respective independent claim.

The technical field of the invention relates to the sealing of buildings and, in particular, the lower portion of the outer wall of the building, i.e. the plinth of a building.

A facade with or without a composite heat insulation system has to be able to withstand a lot. Especially the lower portion thereof is frequently subjected to severe stress. Most of the stress on the surface comes from the impact of spray water, meltwater, as well as soil moisture. The term "moisture protection" as it is used herein includes not only the protection against soil moisture, but also against seeping water or non-pressing surface water. Sealing mortar according to the invention is a sealing compound for use for example as protective layer against moisture, frost and for water resistance.

Known sealing mortars are of an organic type having an organic binder which is for example an epoxy resin. Organic sealing mortars are of advantage with respect to waterproofing. They allow for preventing the introduction of any kind of water impacting on the walls which would enter the wall material. Water entering the wall material is a problem as it causes damages, i.e. due to cracks caused by frost water or algal formation.

Sealing mortar is applied at the plinth of a building, e.g. with a trowel, in a few mm thickness onto a layer of a mineral mortar. The mineral mortar is typically applied in different steps so as to form several layers. Mineral mortars are of disadvantage insofar as they are not waterproofing. Known mortars have a composition comprising a mineral binder, like Portland cement or calcium hydroxide, sand and lime aggregates, fibers and starch. Adhesion improving agents and hydrophobing agents are added, if any, in a low amount. The application of such known "mineral" mortars to the plinth of a building would not solve the problem of providing "moisture protection".

It is known to apply to the plinth of a building several mortar layers for reinforcement and for sealing thereof. A mineral mortar is applied with a reinforcing layer (e.g. a mesh). The drying time depends on the thickness of the applied layer. In any case a long pause is needed because of the mineral mortar needs to completely dry out before the application of the waterproof organic sealing mortar. The drying time causes deliberate pauses in which the applicator normally leaves the construction site and comes come back another day. Typically a first layer of mineral mortar is applied. Since the mineral mortar needs to completely dry out after eight days a first layer of organic sealing mortar can be applied. A second layer of organic sealing mortar is applied one day later. Finishing the surface in this way needs a minimum of ten days. Because usually the applicator has several kilometers to get to the construction site, there is a strong need to avoid pauses during the application of the sealing mortar.

In the state of the art the WO 2013/063743 A1 relates to a mortar composition for exterior insulation finish system (EIFS) showing a good impact resistance after weathering, comprising Portland cement, fillers, a cellulose ether, redispersible polymer powder, polymer fibers and hydrophobic agents.

Therefore, it is an object of the present invention, to provide a mineral sealing mortar for moisture protection of the plinth of a building which overcomes or at least greatly reduces the disadvantages known from products already in the market. Especially, there is a need for a sealing mortar which allows for a proper moisture protection of the wall without the necessity of applying additional organic sealing mortar layers.

According to one aspect of the invention, there is provided a mineral sealing mortar for moisture protection of the plinth of a building. The sealing mortar comprises in a dry state 60 wt% to 70 wt% of aggregates, 10 wt% to 25 wt% of a mineral binder, 0.01 wt% to 1.0 wt% of silicates as rheological agents, 0.015 wt% to 1.0 wt% of modified starch, 0.1 wt% to 1.0 wt% of fibers, 0.3 wt% to 0.7 wt% of a hydrophobing agent and 5 wt% to 9 wt% of an adhesion agent.

Advantageously, the addition of the hydrophobing agent in combination with the adhesion agent provides a mineral sealing mortar with a sufficient moisture protection and a good applicability. That means the mineral sealing mortar according to the invention does not require any additional moisture protection but rather the capillary water transport is prevented. Tests have shown that adding the hydrophobing agent in combination with the adhesion agent below the given values does not result in sufficient waterproofness, i.e. in a sufficient reduction of the water absorbance. Such a test includes the application of the mineral sealing mortar to a test surface (typical thickness is between 7 to 15 mm). Waiting for 28 days apply water with a pressure of 1.5 bar. The test is passed if no water protrudes through the layer of the mineral sealing mortar. On the other side of the range, above the given values for adding the hydrophobing agent in combination with the adhesion agent, the workability of the material decreases, i.e. due to film formation occurs on the surface of the material.

As modified starch a starch ether can be used. In particular aspects of the invention the mineral sealing mortar additionally comprises a chromat reducing agent or a water retention agent (i.e. methylcellulose).

Advantageously, the mineral sealing mortar according to the invention comprises sand aggregates. Preferably, a first sand aggregate fraction having a grain size of 0,1 to 0,3 mm, and a second sand, aggregates fraction having a grain size of 0,3 to 0,6 mm. The limestone grains preferably have a first fraction of grain in a preferred size of 0,5 to 1 mm and a second fraction is pulverized limestone. The pulverized limestone is of a size preferably has an average grain size smaller than 0,2 mm. All grain sizes are determined by making linear intercepts of the grain boundaries.

Advantageously, the sealing mortar according to the invention comprises aggregates with a defined sieve curve comprising a grain size range from 0.1 to 1.0 mm. Preferably the aggregates have an optimized grain size distribution having a high packing density such that the density of the mortar is enhanced.

The amount of adhesion agent is from 5 to 9 wt%. This amount is advantageous since the balance between workability and moisture resistance is kept best.

According to one aspect, the adhesion agent is a redispersible polymer powder which allows preparing a dry mix of the mineral sealing mortar to be mixed with water at the construction site. As adhesion agent for example a copolymer of vinyl acetate, ethylene and higher vinyl esters can be used. These adhesion agents additionally act as hydrophobing agents so as to support the effect of the added hydrophobing agent.

The amount of hydrophobing agent is between 0.3 to 0.7 wt%. Preferably, the hydrophobing agent is oleochemical hydrophobing agent, in particular with a carbon chain length from 14 to 18, for example in form of a sodium soap.

The mineral sealing mortar comprises 0.01 wt% to 1.0 wt% of silicates as rheological agents. A person skilled in the art knows what compounds are suitable for is purpose. Phyllosilicates or clays are useful, for example, as rheological agents.

Advantageously the mineral sealing mortar further comprises an air void reducing agent to reduce the porosity of the set mineral sealing mortar. This allows reducing the capillaries and, hence, the production of high-density, air-poor set mortar, in particular, with a minimum of pores at the surface thereof. Preferred air void reducing agents are blends of modified fatty, alkoxylated compounds and emulsifiers in emulsion form. Compounds useful for this purpose are known to the person skilled in the art. According to a preferred embodiment of the invention air void reducer and rheological agents can be contained in similar amounts.

According to one aspect of the invention the fibers added to the mineral sealing mortar are short cut fibers. Short cut fibers are of advantage because of the fiber length of 1.5 mm to 6 mm what is short enough to allow for a good applicability and provides a good strength. Preferably, the fibers can be polyvinyl alcohol fibers (PVA), polyvinyl chloride fibers (PVC), polyacrylonitrile fibers (PAN), polyamide fibers (PA), polyester fibers (PE), or polypropylene fibers (PP).

Another aspect relates to that the binder is Portland cement or calcium hydroxide or Portland cement and/or calcium hydroxide in combination with metakaolin. Furthermore, hydraulic lime or high hydraulic lime or trass flour can be used instead of Portland cement or calcium hydroxide.

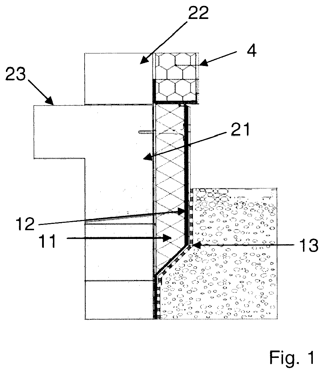

In the following, the invention will be described in further detail by means of an example with reference to the drawing of Fig.1 which is a sectional view of a plinth of a building.

In the example of Fig. 1 , the plinth 21 of a building is formed on the lower portion of the outer wall 22 of the building and extends below the upper edge of the raw bottom 23 of the ground floor.

For thermally insulating plinth 21 (i.e. below an ETIC system 4 covering outer wall 22 of the base floor), insulation panels 1 1 (e.g. EPS insulation panels) are fixed to plinth 21. Known solutions described in the introductory part (not shown) in which insulation panels are covered by a reinforcing layer which comprises a mineral mortar in which a reinforcing mesh is laid, wherein the mineral mortar does not provide waterproofness, have an organic mortar is applied for sealing thereof. In difference thereto in the present illustration of the invention, only a single type of mortar, a layer of mineral sealing mortar 12 which might accommodate a reinforcing web (not shown) is applied to insulation panels 11.

According to the invention a single type of mineral sealing mortar 12 is applied for moisture protection. Mineral sealing mortar 12 comprises 60 wt% to 70 wt% of sand aggregates in a size of 0.1 to 0.3 mm and in a size of 0.3 to 0.6 mm, limestone grains in a size of 0.5 to 1 mm and pulverized limestone.

As mineral binder 10 wt% to 25 wt% of calcium hydroxide, Portland cement and metakaolin are added. Further, the composition comprises 0.1 wt% to 1.0 wt% of fibers and 0.15 wt% to 1.0 wt% of starch ether and/or cellulose

In the shown example the moisture protection is achieved due to adding to the mineral sealing mortar 5 wt% to 9 wt% of the adhesive agent and 0.3 wt% to 0.7 wt% of the hydrophobing agent which results in a sufficient moisture barrier and prevents the capillary water transport.

The water proofing properties of the mineral sealing mortar were tested according to DIN 1048-5, however, the amount of applied mortar was 12.5 kg/m² and the prisms size was 20 x 20 x 4 cm³. Before testing, the coated prisms of concrete were kept for 28 days in normed climate according to DIN 50014-23/50-2.

After 28 days of 0.15 bar water load no moisture ingress was found on the fracture surfaces of the broken concrete prisms.

Tensile bond strength was tested according to DIN EN 1542. Concrete prisms of the same size as above were coated with the mortar in an amount of 12.5 kg/m². The testing of the tensile bond strength after standard conditions, water immersion, and after freeze-thaw cycles according to EN 1348 were conducted directly following the respective storage on 5 replicates, each.

After storing at standard conditions and at a testing velocity of 100 N/s average tensile bond strength was 0.80 N/mm². Failure was 100 % due to cohesion failure.

After water immersion and at the same testing velocity as above, average tensile bond strength was 0.54 N/mm². Failure was 100 % due to cohesion failure.

After 25 freeze-thaw cycles in 7 days and at the same testing velocity as above, average tensile bond strength was 0.58 N/mm². Failure was 100 % due to cohesion failure.

## Claims

1. Mineral sealing mortar to be applied at the plinth of a building for moisture protection, the sealing mortar comprising in a dry state:
60 wt% to 70 wt% of aggregates,
10 wt% to 25 wt% of a mineral binder,
0.1 wt% to 1.0 wt% of fibers,
0.01 wt% to 1.0 wt% of silicates as rheological agents,
0.015 wt% to 1.0 wt% of modified starch,
0.3 wt% to 0.7 wt% of a hydrophobing agent, and
5 wt% to 9 wt% of an adhesion agent.

2. Mineral sealing mortar according to claim 1, wherein the aggregates comprise sand aggregates with a defined sieve curve comprising a grain size range from 0.1 to 1.0 mm.

3. Mineral sealing mortar according to claim 1 or 2, wherein the aggregate comprises a first fraction of limestone grains having an average grain size of 0.5 to 1 mm, and a second fraction of limestone having an average grain size below 0.2 mm.

4. Mineral sealing mortar according to any one of the proceeding claims, wherein the adhesion agent is a redispersible polymer powder.

5. Mineral sealing mortar according to any one of the proceeding claims, wherein the hydrophobing agent is oleochemical hydrophobing agent, in particular a sodium soap.

6. Mineral sealing mortar according to any one of the proceeding claims further comprising an air void reducing agent to reduce the porosity of the set sealing mortar.

7. Mineral sealing mortar according to any one of the proceeding claims, wherein the fibers are short cut fibers of a length in between 1.5 mm and 6 mm.

8. Mineral sealing mortar according to any one of the proceeding claims, wherein the binder is Portland cement or calcium hydroxide or hydraulic lime or high hydraulic lime or trass flour or combinations of these binders with metakaolin or Portland cement and calcium hydroxide.

9. Building having a plinth to which a mineral sealing mortar according to any one of the preceding claims is applied.

## Patentansprüche

1. Mineralischer Dichtungsmörtel zum Auftragen auf den Sockel eines Bauwerks zum Schutz vor Feuchtigkeit, wobei der Dichtungsmörtel in einem trockenen Zustand aufweist:
60 Gew.-% bis 70 Gew.-% Zuschlagstoffe,
10 Gew.-% bis 25 Gew.-% eines mineralischen Bindemittels,
0,1 Gew.-% bis 1,0 Gew.-% Fasern,
0,01 Gew.-% bis 1,0 Gew.-% Silikate als Rheologiemittel,
0,015 Gew.-% bis 1,0 Gew.-% modifizierte Stärke,
0,3 Gew.-% bis 0,7 Gew.-% eines Hydrophobierungsmittels und
5 Gew.-% bis 9 Gew.-% eines Haftvermittlers.

2. Mineralischer Dichtungsmörtel nach Anspruch 1, wobei die Zuschlagstoffe Sand-Zuschlagstoffe mit einer definierten Sieblinie aufweisen, umfassend einen Korngrößenbereich von 0,1 bis 1,0 mm.

3. Mineralischer Dichtungsmörtel nach Anspruch 1 oder 2, wobei der Zuschlagstoff einen ersten Anteil von Kalksteinkörnern, aufweisend eine durchschnittliche Korngröße von
0,5 bis 1 mm, und einen zweiten Anteil von Kalkstein, aufweisend eine durchschnittliche Korngröße unter 0,2 mm, umfasst.

4. Mineralischer Dichtungsmörtel nach einem der vorangehenden Ansprüche, wobei der Haftvermittler ein redispergierbares Polymerpulver ist.

5. Mineralischer Dichtungsmörtel nach einem der vorangehenden Ansprüche, wobei das Hydrophobierungsmittel ein oleochemisches Hydrophobierungsmittel, insbesondere Natriumseife, ist.

6. Mineralischer Dichtungsmörtel nach einem der vorangehenden Ansprüche, ferner umfassend ein Luftporenreduzierungsmittel zum Reduzieren der Porosität des abgebundenen Dichtungsmörtels.

7. Mineralischer Dichtungsmörtel nach einem der vorangehenden Ansprüche, wobei die Fasern Kurzschnittfasern mit einer Länge zwischen 1,5 mm und 6 mm sind.

8. Mineralischer Dichtungsmörtel nach einem der vorangehenden Ansprüche, wobei das Bindemittel Portland-Zement oder Calciumhydroxid oder hydraulischer Kalk oder hochhydraulischer Kalk oder Trassmehl oder Kombinationen dieser Bindemittel mit Metakaolin
oder Portland-Zement und Calciumhydroxid ist.

9. Bauwerk, aufweisend einen Sockel, auf den ein mineralischer Dichtungsmörtel nach einem der vorangehenden Ansprüche aufgetragen ist.

## Revendications

1. Mortier d'étanchéité minéral à appliquer sur la base d'un bâtiment pour la protection contre l'humidité, le mortier d'étanchéité à l'état sec comprenant :
60% en poids à 70% en poids d'agrégats,
10 % en poids à 25 % en poids d'un liant minéral,
0,1 % en poids à 1,0 % en poids de fibres,
0,01 % en poids à 1,0 % en poids de silicates comme adjuvants rhéologiques,
0,015 % en poids % à 1,0 % en poids d'amidon modifié,
0,3 % en poids à 0,7 % en poids d'un agent hydrophobe et
5 % en poids à 9 % en poids d'un agent d'adhésion.

2. Mortier d'étanchéité minéral selon la revendication 1, dans lequel les agrégats comprennent des agrégats de sable présentant une courbe de tamisage définie comprenant une plage de taille des grains de 0,1 à 1,0 mm.

3. Mortier d'étanchéité minéral selon la revendication 1 ou 2, dans lequel l'agrégat comprend une première fraction de grains de calcaire ayant une taille moyenne des grains de 0,5 à 1 mm, et une seconde fraction de calcaire ayant une taille moyenne des grains inférieure à 0,2 mm.

4. Mortier d'étanchéité minéral selon l'une des revendications précédentes, dans lequel l'agent d'adhésion est une poudre de polymère redispersable.

5. Mortier d'étanchéité minéral selon l'une des revendications précédentes, dans lequel l'agent hydrophobe est un agent hydrophobe oléochimique, en particulier du savon de sodium.

6. Mortier d'étanchéité minéral selon l'une des revendications précédentes, comprenant en outre un agent de réduction des pores d'air pour réduire la porosité du mortier d'étanchéité durci.

7. Mortier d'étanchéité minéral selon l'une des revendications précédentes, dans lequel les fibres sont des fibres coupées courtes d'une longueur comprise entre 1,5 mm et 6 mm.

8. Mortier d'étanchéité minéral selon l'une des revendications précédentes, le liant étant du ciment Portland ou de l'hydroxyde de calcium ou de la chaux hydraulique ou de la chaux hautement hydraulique ou de la farine de trass ou des combinaisons de ces liants avec du métakaolin ou du ciment Portland et de l'hydroxyde de calcium.

9. Bâtiment comprenant une base sur laquelle un mortier d'étanchéité minéral selon l'une des revendications précédentes est appliqué.
